## Europäisches Patentamt
## European Patent Office
## Office européen des brevets

(19)

(11) Numéro de publication : **0 246 166 B1**

(12)

# FASCICULE DE BREVET EUROPEEN

(45) Date de publication du fascicule du brevet :
**16.10.91 Bulletin 91/42**

(51) Int. Cl.⁵ : **G02B 6/38, G02B 6/26**

(21) Numéro de dépôt : **87401106.7**

(22) Date de dépôt : **15.05.87**

(54) Atténuateur pour fibres optiques monomode et procédé pour sa fabrication.

(30) Priorité : **15.05.86 FR 8606991**

(43) Date de publication de la demande :
**19.11.87 Bulletin 87/47**

(45) Mention de la délivrance du brevet :
**16.10.91 Bulletin 91/42**

(84) Etats contractants désignés :
**CH DE GB IT LI SE**

(56) Documents cités :
**EP-A- 0 063 085**
**EP-A- 0 074 499**
**EP-A- 0 098 205**
**EP-A- 0 156 075**
**DE-A- 3 042 609**

(56) Documents cités :
**PATENT ABSTRACTS OF JAPAN, vol. 9, no.
296 (P-407)[2019], 22 novembre 1985; & JP-
A-60 133 413**
**PATENT ABSTRACTS OF JAPAN, vol. 5, no. 13
(P-46)[685], 27 janvier 1981; & JP-A-55 143 514**
**PATENT ABSTRACTS OF JAPAN, vol. 3, no.
82, page 20 E 123, 4 juillet 1979; & JP-A-54 59
950**

(73) Titulaire : **RADIALL INDUSTRIE, Société
Anonyme dite:**
**101, rue Philibert Hoffmann Zone Industrielle
Ouest**
**F-93116 Rosny-Sous-Bois (FR)**

(72) Inventeur : **Yin, Huan-Ben**
**14 rue du Loing**
**F-75014 Paris (FR)**

(74) Mandataire : **Nony, Michel et al**
**Cabinet NONY & CIE, 29, rue Cambacérès**
**F-75008 Paris (FR)**

## Description

La présente invention est relative à un atténuateur pour fibres optiques monomode.

La société déposante a déjà décrit dans EP-A 0063085 un connecteur pour fibres optiques comportant deux embouts montés à l'extrémité de chacune des fibres à connecter, un raccord femelle de reconstitution comportant un perçage longitudinal pour supporter et aligner les deux embouts face à face. Le raccord femelle comporte dans sa partie centrale à l'intérieur de son perçage longitudinal, un corps de butée, pour les embouts mâles, notamment une sphère, présentant un orifice axial traversant et autour de celui-ci une portée de contact en regard de chacun des embouts mâles.

Chacun des embouts mâles présente une protubérance tubulaire axiale susceptible de s'engager dans l'orifice du corps de butée et un conduit dans lequel la fibre optique peut être introduite à jeu et immobilisée de manière que son extrémité coïncide avec l'extrémité de la protubérance, chacun des embouts comportant en outre en retrait de la protubérance, et entourant la partie arrière de celle-ci, un évidement annulaire dont la paroi, de préférence de profil conique, définit une portée de contact avec la portée en regard du corps de butée du raccord femelle sous l'action de moyens de pression longitudinaux. Les portées en regard du corps de butée des embouts mâles sont agencées de façon telle que lors de tout mouvement relatif des portées en contact, l'extrémité d'une fibre au niveau de la face d'extrémité de la protubérance d'un embout mâle soit maintenue à une distance constante prédéterminée du centre du corps de butée.

Pour obtenir une certaine fonction d'atténuation, il est possible d'augmenter la distance entre les extrémités des fibres maintenues dans les embouts mâles par exemple en augmentant le diamètre de la sphère constituant le corps de butée.

Le connecteur décrit dans le brevet européen précité peut donc constituer un atténuateur pour des fibres optiques multimodes, mais ne peut en temps que tel servir d'atténuateur pour des fibres optiques monomode car la distance entre les extrémités des fibres serait trop grande et affecterait les caractéristiques du champ transmis.

La présente invention se propose de réaliser un atténuateur pour fibres optiques qui, tout en présentant les caractéristiques générales du connecteur du brevet européen précité, est utilisable pour des fibres optiques monomode en offrant une fonction d'atténuation prédéterminée ou réglable.

L'atténuateur selon l'invention comme décrit dans la rev. 1 se caractérise essentiellement par le fait que la face d'extrémité de la protubérance de chacun des embouts mâles et l'extrémité de la fibre correspondante immobilisée dans ladite protubérance sont inclinées par rapport à un plan perpendiculaire à l'axe longitudinal de l'embout, d'un angle de préférence compris entre 10 et 14 degrés, que les embouts mâles et le raccord femelle de reconstitution comportent des repères d'indexation coopérants déterminant une orientation angulaire déterminée des fibres optiques en regard et que les axes desdites fibres sont décalés d'une valeur déterminée par rapport à l'axe optique de l'atténuateur.

Dans une version permettant de réaliser une fonction d'atténuation réglable, l'un au moins des embouts mâles est réglé en rotation au moyen d'une partie mobile tournante du raccord femelle de reconstitution et d'une bague périphérique permettant de l'immobiliser dans une position angulaire déterminée par rapport audit raccord.

Pour réaliser un atténuateur selon l'invention comme decrit dans la rev. 4, on prépare d'abord chacun des embouts de la manière suivante.

On amène un embout mâle dans lequel une fibre optique monomode a été mise en place et immobilisée, notamment par collage, dans un calibre comportant une pièce de butée reproduisant la forme de la portée d'appui du corps de butée de raccord femelle, on tronçonne et on polit perpendiculairement à l'axe longitudinal de l'embout l'extrémité de la fibre et de la protubérance de l'embout à une distance prédéterminée du centre de la pièce de butée du calibre. Puis, à l'aide d'une lunette de visée, on réalise un précentrage du coeur de la fibre, l'on effectue ensuite un polissage en oblique de la face frontale de la protubérance de l'embout et de la fibre immobilisée à l'intérieur dans un second calibre comportant une pièce de butée reproduisant la forme de la portée d'appui du corps de butée du raccord femelle, après quoi on effectue un réglage final précis à l'aide d'une lunette de visée de manière à introduire un décalage prédéterminé entre l'axe de la fibre et l'axe optique de la lunette matérialisant l'axe optique de l'atténuateur.

D'autres avantages et caractéristiques de l'invention apparaîtront à la lecture de la description suivante d'un exemple de réalisation se référant au dessin annexé dans lequel :

– La figure 1 est une vue en coupe partielle d'un atténuateur selon l'invention de type réglable,

– les figures 2a, 2b, 2c illustrent des positions relatives des embouts mâles et du corps femelle de reconstitution d'un atténuateur selon l'invention pour différentes valeurs d'atténuation déterminées,

– les figures 3 à 6 sont des vues schématiques illustrant les différentes phases successives de réglage d'un embout,

– la figure 7 illustre l'extrémité d'une fibre au cours de la phase de réglage finale et,

– la figure 8 illustre la position relative de deux fibres optiques monomode en regard dans l'atténuateur selon l'invention.

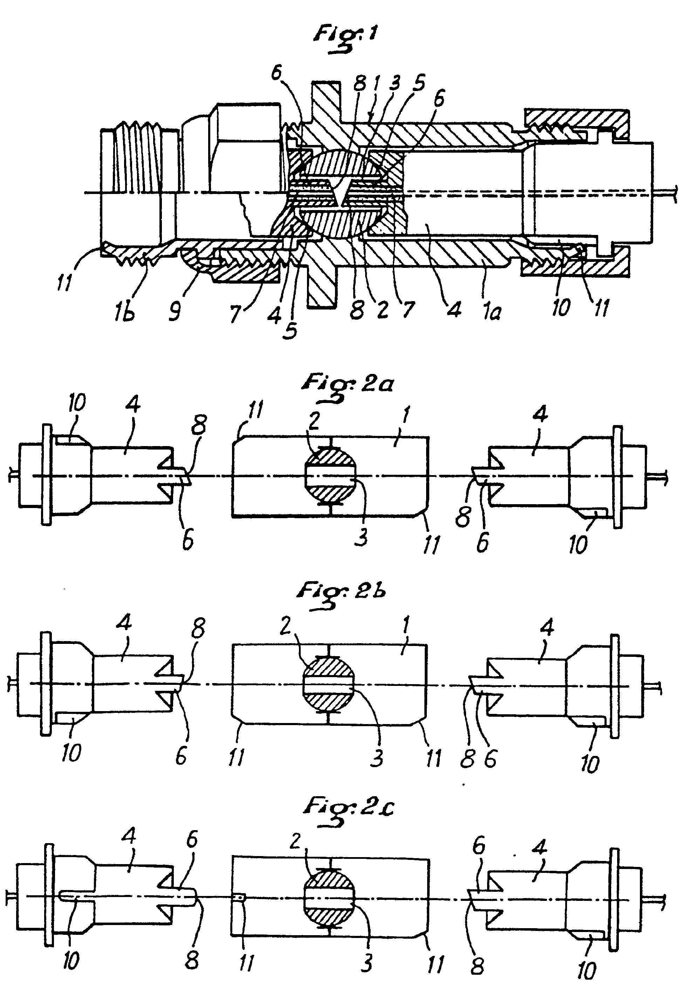

L'atténuateur illustré à la figure 1 comporte les caractéristiques essentielles du connecteur décrit dans EP-A- 0063085 auquel on pourra se référer pour plus de détails.

L'atténuateur comporte essentiellement un raccord femelle de reconstitution 1 à l'intérieur duquel est fixée une sphère 2 munie d'un perçage longitudinal 3.

L'atténuateur comporte deux embouts mâles 4 présentant chacun une portée conique 5 venant en appui contre la sphère 2 et une protubérance axiale 6 à l'intérieur de laquelle est immobilisée une fibre optique 7.

Selon l'invention, la face frontale d'extrémité 8 de chaque protubérance 6 et donc de la fibre optique correspondante forme un angle, par exemple de 13°, par rapport à un plan perpendiculaire à l'axe longitudinal de l'atténuateur.

Dans la version d'atténuateur réglable illustré à la figure 1, le raccord 1 comporte une partie fixe 1a et au moins une partie mobile en rotation 1b et il est prévu une bague périphérique 9 permettant d'immobiliser ladite partie mobile 1b par rapport à ladite partie fixe 1a du raccord femelle de reconstitution 1 une fois atteinte l'orientation angulaire voulue.

Comme on le voit aux figures 1 et 2a à 2c, il est prévu sur le raccord femelle de reconstitution 1 et sur les embouts mâles 4, des repères d'indexation coopérants, par exemple sous forme de rainures 10 sur les embouts 4 et de nervures 11 sur le raccord de reconstitution.

La figure 2a illustre une position relative des embouts et du raccord dans laquelle les faces d'extrémité 8 se trouvent parallèles, cette position correspondant à la valeur d'atténuation minimale de l'ordre de 0,5 dB.

Les figures 1 et 2b illustrent la position d'atténuation maximale d'environ 20dB, tandis que la figure 2c illustre une position d'atténuation intermédiaire d'environ 10dB.

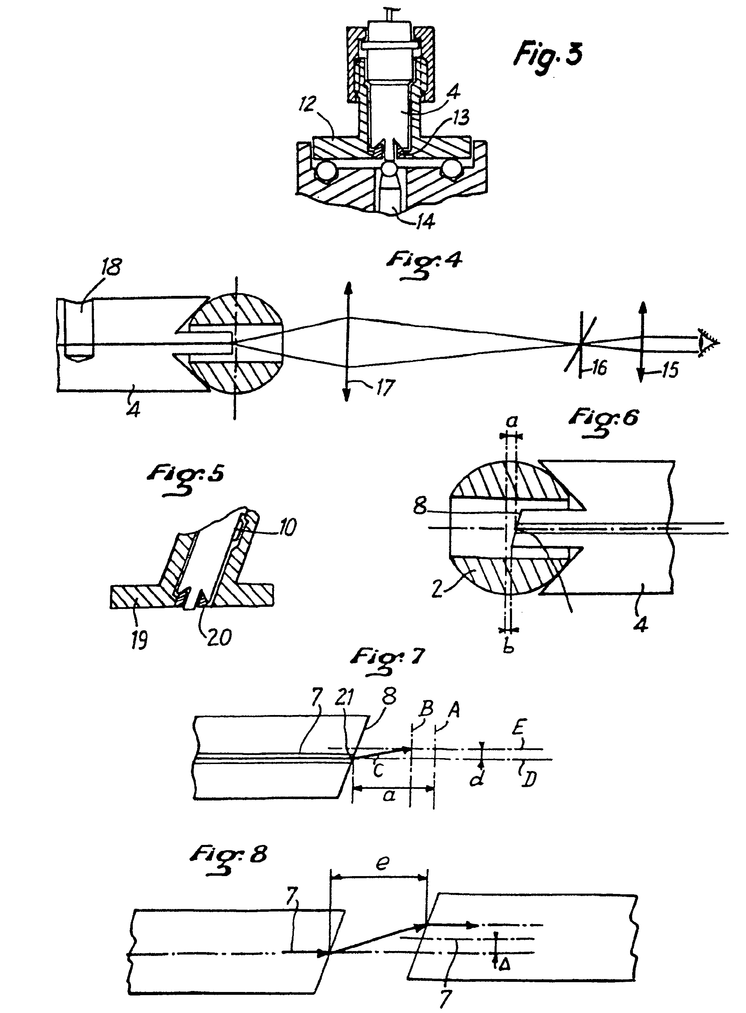

En se référant aux figures 3 à 8, on va décrire le procédé de réalisation et de réglage d'un embout pour réaliser l'atténuateur selon l'invention et correspondant à la valeur d'atténuation minimale.

On met en place un embout 4 dans un calibre de polissage droit 12 comportant un élément de butée 13 en forme de demi-sphère présentant les dimensions de la sphère 2 du raccord femelle de reconstitution.

La cote de polissage est mesurée à l'aide d'un comparateur 14 préalablement calibré à l'aide d'un embout étalon dont on connaît la position exacte de la face frontale par rapport au centre de la demi-sphère.

On effectue le polissage de manière telle que la face frontale de le protubérance de l'embout se trouverait à une distance de 4 à 7 µm par rapport au centre de la sphère 2 si l'on mettait en place l'embout correspondant sur la sphère.

On effectue ensuite comme illustré à la figure 4 un précentrage du coeur de la fibre par rapport au centre de la sphère.

A cet effet, on utilise une lunette de visée comportant un oculaire 15 muni d'un réticule en forme de croisillon 16 et un objectif 17. Par l'intermédiaire d'un trou radial 18 prévu dans l'embout 4, on illumine à l'aide d'une lumière blanche la fibre maintenue dans l'embout en regard de la lunette dont l'objectif 17 est focalisé sur la face frontale de la fibre précédemment polie. Le centre de croisillon du réticule 16 est préréglé de manière à visualiser le centre de la sphère. On effectue alors le réglage jusqu'à ce que le centre du coeur de la fibre illuminée coïncide avec le centre du croisillon du réticule, la face frontale de la fibre se trouvant alors à une distance par exemple de 6µm du centre de la sphère.

On effectue ensuite un polissage oblique de la face d'extrémité de la protubérance de l'embout et donc de la fibre en utilisant un calibre de polissage oblique 19 (figure 5) comportant une pièce de butée 20 reproduisant la forme de la portée d'appui de la sphère 2, la cote de polissage étant mesurée à l'aide d'un comparateur (non représenté) préalablement calibré avec un embout étalon à face d'extrémité oblique dont on connaît la cote exacte par rapport au centre de la pièce de butée.

On a illustré à la figure 6 l'embout 4 ainsi réalisé en appui contre une sphère 2 la distance $\underline{a}$ mesurée sur l'axe 21 de la fibre 7 entre son extrémité et le centre de la sphère étant par exemple de 13 à 15 µm, la distance $\underline{b}$ étant par exemple de 4 à 7 µm.

Après cette phase de polissage, on effectue le réglage final de l'embout sur la lunette illustrée à la figure 4 en vue de réduire les pertes à la connexion.

On a matérialisé sur la figure 7 par A l'axe de la sphère par B le plan focal de la lunette et par C le faisceau dévié du fait de l'inclinaison de la face 8.

On effectue le réglage de telle manière que l'axe réel D de la fibre soit décalé d'une valeur $\underline{d}$ par rapport à l'axe optique E de la lunette matérialisant l'axe optique de l'atténuateur.

Cette opération étant effectuée sur les deux embouts d'un atténuateur, les fibres se trouveront donc dans la position illustrée à la figure 8 chacune avec un décalage $\underline{d}$ par rapport à l'axe optique, c'est-à-dire avec un décalage total $\Delta = 2d$ entre les axes réels des deux fibres en regard.

La déviation du faisceau matérialisée sur la figure 8 sera partiellement compensée.

Pour une distance $\underline{e}$ entre les faces d'extrémité des fibres de par exemple 20 µm avec un angle d'inclinaison des faces d'extrémité des fibres de 12° et un décalage $\Delta$ de 0,8 µm, on obtient une perte à la connexion de seulement 0,25 dB alors que si les fibres étaient mécaniquement parfaitement alignées, cette perte serait de 0,7 dB.

L'écartement axial $\underline{e}$ entre les extrémités des fibres doit dans la pratique être toujours suffisamment grand pour permettre une rotation relative des deux fibres sans aucun contact entre elles.

## Revendications

1. Atténuateur pour fibres optiques monomodes comportant deux embouts mâles (4) montés à l'extrémité de chacune des fibres à connecter, un raccord femelle de reconstitution (1) comportant un perçage longitudinal pour supporter et aligner les deux embouts face à face, le raccord femelle comportant dans sa partie centrale à l'intérieur de son perçage longitudinal un corps de butée (2) pour les embouts mâles, notamment une sphère, présentant un orifice axial traversant (3), autour de celui-ci, une portée de contact en regard de chacun des embouts mâles qui présentent chacun une protubérance tubulaire axiale (6) ayant une face d'extrémité (8) susceptible de s'engager dans l'orifice du corps de butée, un conduit dans lequel la fibre optique (7) peut être introduite à jeu et immobilisée de manière que son extrémité coïncide avec l'extrémité de la protubérance, chacun des embouts comportant en outre, en retrait de la protubérance et entourant la partie arrière de celle-ci un évidement annulaire dont la paroi, de préférence de profil conique, définit une portée de contact avec la portée en regard du corps de butée du raccord femelle sous l'action de moyens de pression longitudinaux, caractérisé par le fait que la face d'extrémité (8) de la protubérance (6) de chacun des embouts mâles (4) et l'extrémité de la fibre correspondante (7) immobilisée dans ladite protubérance sont inclinées par rapport à un plan perpendiculaire à l'axe d'un embout, que les axes desdites fibres (7) sont décalés d'une valeur prédéterminée ($d$) par rapport à l'axe de l'atténuateur, que lesdites fibres (7) sont décalées en rotation l'une par rapport à l'autre d'une valeur prédéterminée, correspondant au degré d'atténuation recherché et que le raccord femelle de reconstitution (1) et les embouts mâles (4) comportent des repères d'indexation coopérants (10,11) déterminant l'orientation angulaire des fibres optiques (7) en regard.

2. Atténuateur selon la revendication 1, caractérisé par le fait que l'angle d'inclinaison des faces d'extrémité (8) de la protubérance de chacun des embouts mâles et de l'extrémité de la fibre correspondante par rapport à un plan perpendiculaire à l'axe longitudinal de l'embout est compris entre 10 et 14 degrés.

3. Atténuateur selon l'une quelconque des revendications 1 et 2, à atténuation réglable, caractérisé par le fait que le raccord femelle de reconstitution (1) comporte une partie fixe (1a) et au moins une partie mobile en rotation (1b), une bague périphérique (9) étant prévue pour immobiliser la partie mobile par rapport à la partie fixe dans une position angulaire déterminée.

4. Procédé pour réaliser un atténuateur selon l'une quelconque des revendications précédentes, caractérisé par le fait que l'on met en place sur un raccord femelle de reconstitution (1) deux embouts mâles (4) préparés de la manière suivante : on met en place un embout mâle (4) dans lequel une fibre optique monomode (7) a été mise en place et immobilisée, notamment par collage, dans un calibre (12) comportant une pièce de butée (13) reproduisant la forme de la portée d'appui du corps de butée du raccord femelle, on tronçonne et on polit perpendiculairement à l'axe longitudinal de l'embout l'extrémité de la fibre et la protubérance de l'embout à une distance prédéterminée du centre de la pièce de butée du calibre, on réalise un précentrage du coeur de la fibre à l'aide d'une lunette de visée, l'on effectue un polissage oblique de la face frontale de la protubérance de l'embout et de la fibre immobilisée à l'intérieur dans un second calibre (19) comportant une pièce de butée (20) reproduisant la forme de la portée d'appui du corps de butée du raccord femelle après quoi on effectue un réglage final précis à l'aide d'une lunette de visée de manière à introduire un décalage prédéterminé ($d$) entre l'axe de la fibre et l'axe optique de la lunette matérialisant l'axe optique de l'atténuateur.

## Patentansprüche

1. Dämpfungsglied für optische Monomodefasern mit zwei Einsteckmuffen (4), die am Ende jeder der zu verbindenden Fasern angebracht sind, einer Wiederherstellungs-Verbindungsbuchse (1) mit einer Längsbohrung zur Stützung und Ausrichtung der Einsteckmuffen Ende gegen Ende, welche Verbindungsbuchse in ihrem mittleren Teil im Inneren ihrer Längsbohrung einen Anschlagkörper (2) für die Einsteckmuffen, insbesondere eine Kugel aufweist, der eine axiale durchgehende Öffnung (3) und, diese umgebend, eine Anlagefläche für jede der Einsteckmuffen bildet, die jeweils einen rohrförmigen axialen Vorsprung (6) mit einer Stirnfläche (8) für den Eingriff in die Öffnung des Anschlagkörpers aufweisen sowie eine Leitung, in der die optische Faser (7) derart mit Spiel einführbar und fixierbar ist, daß ihr Ende mit dem Ende des Vorsprungs zusammenfällt, wobei jede der Einsteckmuffen außerdem eine gegenüber dem Vorsprung zurückspringende und dessen hinteren Teil umgebende ringförmige Ausnehmung aufweist, deren vorzugsweise konische Wand eine Anlagefläche für die gegenüberliegende Anlagefläche des Anschlagkörpers der Verbindungsbuchse unter der Wirkung von Längs-Druckmitteln bildet, dadurch **gekennzeichnet**, daß die Stirnfläche (8) des Vorsprungs (6) jeder der Einsteckmuffen (4) und das Ende der zugehörigen Faser (7), die in dem Vorsprung fixiert ist, in bezug auf eine zur Achse der Einsteckmuffe senkrechte Ebene abgeschrägt sind, daß die Achsen der Fasern (7) um einen bestimmten Betrag (d) in bezug auf die Achse des Dämpfungsgliedes versetzt sind, daß die Fasern (7) um einen bestimmten Betrag, entsprechend dem gewünschten Dämpfungsgrad, gegeneinander verdreht sind und daß die Wiederherstellungs-Verbindungsbuchse (1) und die Einsteckmuffen (4) mit einander zusammenwirkende Indizierungs-Paßmarken (10,11) aufweisen, die die Winkelstellung der einander gegenüberliegenden optischen Fasern (7) bestimmen.

2. Dämpfungsglied nach Anspruch 1, dadurch **gekennzeichnet**, daß der Neigungswinkel der Stirnfläche des Endes (8) des Vorsprungs jeder der Einsteckmuffen und des Endes der zugehörigen Faser in bezug auf eine zur Längsachse der Einsteckmuffe senkrechte Ebene zwischen 10 und 14 Grad liegt.

3. Dämpfungsglied nach Anspruch 1 oder 2, mit einstellbarer Dämpfung, dadurch **gekennzeichnet**, daß die Verbindungsbuchse (1) einen festen Teil (1a) und wenigstens einen drehbeweglichen Teil (1b) aufweist, und daß am Umfang ein Ring (9) zum Fixieren des beweglichen Teils in einer bestimmten Winkelstellung in bezug auf den festen Teil vorgesehen ist.

4. Verfahren zur Bildung eines Dämpfungsgliedes nach einem der vorstehenden Ansprüche, dadurch **gekennzeichnet**, daß man an einer Wiederherstellungs-Verbindungsbuchse (1) zwei Einsteckmuffen (4) in Position bringt, die in folgender Weise vorbereitet sind: eine Einsteckmuffe (4), in der eine optische Monomodefaser (7) positioniert und fixiert worden ist, insbesondere durch Klebung, wird in eine Kalibrierlehre (12) eingesetzt, die ein Anschlagstück (13) aufweist, das die Form der Anlagefläche des Anschlagkörpers der Verbindungsbuchse nachbildet, das Ende der Faser und der Vorsprung der Einsteckmuffe werden in einem bestimmten Abstand vom Mittelpunkt des Anschlagsstücks der Kalibrierlehre rechtwinklig zur Längsachse der Einsteckmuffe abgeschnitten und poliert, mit Hilfe einer Zieloptik wird eine Vorzentrierung des Kerns der Faser ausgeführt, in einer zweiten Kalibrierlehre (19) mit einem Anschlagstück (20), das die Form der Anlagefläche des Anschlagkörpers der Verbindungsbuchse nachbildet, werden die Stirnfläche des Vorsprungs der Einsteckmuffe und die im Inneren fixierte Faser schräg poliert, wonach eine präzise Endeinstellung mit Hilfe einer Zieloptik ausgeführt wird, indem ein bestimmter Versatz (d) zwischen der Achse der Faser und der optischen Achse der Zieloptik eingestellt wird, die die optische Achse des Dämpfungsgliedes repräsentiert.

## Claims

1. Attenuator for monomode optical fibres, comprising two male terminals (4) mounted at the end of each of the fibres to be connected, a female reconstitution coupler (1) comprising a longitudinal bore for supporting and aligning the two terminals face-to-face, the female coupler comprising, in its central zone inside its longitudinal bore, an abutment block (2) for the male terminals, notably a sphere, having a through axial orifice (3), around this a contact bearing surface facing each of the male terminals, which each have an axial tubular protuberance (6), having an end face (8), capable of engaging into the orifice of the abutment block, a duct in which the optical fibre (7) may be introduced with clearance and fixed in such a way that its end coincides with the end of the protuberance, each of the terminals comprising, in addition, set back from the protuberance and surrounding the rear part of it, an annular recess, the face of which, preferably of conical form, defines a contact bearing surface with the facing bearing surface of the abutment block of the female coupler under the action of longitudinal pressing means, characterized by the fact that the end face (8) of the protuberance (6) of each of the male terminals (4) and the end of the corresponding fibre (7) fixed in said protuberance are inclined relative to a plane perpendicular to the axis of the terminal, that the axes of said fibres (7) are offset by a predetermined value ($\underline{d}$) from the axis of the attenuator, that said fibres (7) are rotationally offset, relative to each other, by a predetermined value corresponding to the degree of attenuation desired, and that the female reconstitution coupler (1) and the male terminals (4) comprise cooperating indexation reference marks (10, 11) which determine the angular orientation of the facing optical fibres (7).

2. Attenuator according to Claim 1, characterized by the fact that the angle of inclination of the end faces (8) of the protuberance of each of the male terminals and of the end of the corresponding fibre with respect to a plane perpendicular to the longitudinal axis of the terminal is from 10 to 14°.

3. Attenuator according to any one of Claims 1 and 2, with adjustable attenuation, characterized by the fact that the female reconstitution coupler (1) comprises a fixed part (1a) and at least one rotationally movable part (1b), a peripheral ring (9) being provided for fixing the movable part relative to the fixed part in a specific angular position.

4. Process for constructing an attenuator according to any one of the preceding Claims, characterized by the fact that two male terminals (4) are positioned on a female reconstitution coupler (1), the male terminals having been prepared as follows: a male terminal (4), in which a monomode optical fibre (7) has been positioned and fixed, notably by gluing, is placed in a jig (12) comprising an abutment piece (13) reproducing the form of the bearing surface of the abutment body of the female coupler, the ends of the fibre and of the protuberance of the terminal are cut off and polished perpendicularly to the longitudinal axis of the terminal at a predetermined distance from the centre of the abutment piece of the jig, a precentering of the core of the fibre is carried out by means of a sighting telescope, an oblique polishing is carried out of the front faces of the protuberance of the terminal and of the fibre fixed inside it, in a second jig (19) comprising an abutment piece (20) that reproduces the form of the bearing surface of the abutment body of the female coupler, after which a final, precise adjustment is carried out by means of a sighting telescope, in such a way as to create a predetermined offset ($\underline{d}$) between the axis of the fibre and the optical axis of the telescope, defining the optical axis of the attenuator.

*Fig. 1*

*Fig. 2a*

*Fig. 2b*

*Fig. 2c*

Fig. 3

Fig. 4

Fig. 5

Fig. 6

Fig. 7

Fig. 8